# DEMANDE DE BREVET EUROPEEN

(11) **EP 0 629 821 A1**
(43) Date de publication de la demande: **21.12.1994**
(21) Numéro de dépôt: 94460019.6
(22) Date de dépôt: 17.06.1994
(51) Int. Cl.: F24D 13/02, E04F 15/18

(54) **Plancher destiné à être équipé d'un élément de chauffage par le sol et procédés de réalisation d'un tel plancher**

(30) Priorité: 18.06.1993 FR 9307670
(71) Demandeur: SOCIETE DELEAGE ELECTRONIQUE SA, F-35416 Saint-Malo Cédex (FR)
(72) Inventeur: Deleage, Philippe, F-35400 Saint-Malo (FR); Deleage, Pierre, F-35430 Saint-Suliac (FR)
(74) Mandataire: Le Guen, Louis François

(57) **Abrégé**

La présente invention concerne un plancher d'habitation destiné à être équipé d'un élément de chauffage (7) par le sol, tel qu'un câble ou film chauffant électrique, constitué d'une couche (1) d'un matériau isolant thermique qui repose sur le sol (2) et d'une dalle de béton (3) sur ladite couche (1), ledit élément de chauffage (7) se trouvant noyé dans ladite dalle (3).

Ladite dalle de béton (3) repose sur ladite couche d'isolation (1) par l'intermédiaire de supports (4) de manière à former un ou plusieurs espaces de circulation d'air (6) sous ladite dalle de béton (3).

## Description

La présente invention concerne un plancher destiné à être équipé d'un élément de chauffage par le sol, tel qu'un câble ou un film chauffant électrique. Elle concerne également des procédés de réalisation d'un tel plancher ainsi qu'une plaque modulaire utilisée pour la mise en oeuvre d'un desdits procédés.

Traditionnellement, un tel plancher est constitué d'une couche d'un matériau isolant thermique qui repose sur le sol, par exemple constitué d'hourdis, et d'une dalle de béton. Des câbles chauffants ou des films chauffants se trouvent en sandwich entre la couche d'isolant et la dalle de béton. Un revêtement, par exemple une moquette, repose sur la dalle de béton. La dalle de béton a généralement une épaisseur modérée de l'ordre de cinq centimètres.

Un tel plancher donne entière satisfaction, mais il est des situations dans lesquelles l'élément chauffant noyé dans la dalle peut s'échauffer de manière exagérée pouvant ainsi entraîner sa dégradation. Ces situations ont lieu lorsqu'on pratique un blocage thermique. Par exemple, un objet présentant des propriétés thermiques d'isolant, tel qu'un fauteuil ou un matelas en mousse cellulaire, est posé directement sur le plancher sans espace intercalaire. La présence d'un tel objet s'oppose à la diffusion de la chaleur émise par l'élément chauffant entraînant une élévation importante de sa température et de son proche environnement. Cette élévation peut entraîner la dégradation de l'élément chauffant lui-même et créer localement des dommages, notamment, sur les revêtements décoratifs ainsi qu'à la couche d'isolation. On notera que dans ces situations, le thermostat d'ambiance ne relève aucune élévation de température.

On a déjà proposé des solutions à ce problème, notamment, comme cela est décrit dans le document de brevet FR-A-2 679 630, en munissant l'élément chauffant d'un conducteur de contrôle qui est intégré dans la dalle de béton et qui permet la commande de l'arrêt de l'alimentation de l'élément chauffant en cas d'élévation importante de la température locale.

On connaît par ailleurs notamment par le document DE-A-1 961 882 des planchers qui sont constitués d'une couche d'un matériau isolant thermique qui repose sur le sol et d'une dalle de béton sur ladite couche. Selon ce document, ladite dalle de béton repose sur ladite couche d'isolation par l'intermédiaire de supports de manière à former un ou plusieurs espaces de circulation d'air sous ladite dalle de béton.

Ces espaces de circulation sous la dalle de béton permettent de résoudre le problème évoqué ci-dessus dans la mesure où ils permettent d'évacuer l'excédent de chaleur engendré par l'élément chauffant du fait d'un blocage thermique.

Le but de l'invention est de proposer des procédés de réalisation d'un plancher qui comporte, à l'instar du plancher décrit dans le document de brevet DE-A-1 961 882, des espaces de circulation d'air sous la dalle de béton.

Selon un premier mode de réalisation, il consiste à poser une couche d'un matériau isolant sur le sol, à poser sur ladite couche un élément prévu pour former des moules pour lesdits supports, à poser sur ledit élément l'élément de chauffage, puis à couler sur ledit élément du béton de manière à former lesdits supports et à enrober l'élément de chauffage.

Selon une variante, il consiste à poser une couche d'un matériau isolant sur le sol, à poser sur ladite couche un élément qui forme des moules pour lesdits supports ainsi que pour un tablier formant la partie inférieure de ladite dalle, à couler dans ledit élément du béton de manière à former lesdits supports et ledit tablier, à poser sur ledit tablier un élément chauffant et à couler une dalle de béton.

Selon une autre caractéristique de l'invention, l'élément utilisé est constitué d'une plaque dans laquelle sont formés des godets. Pour sa pose, on fait reposer le fond desdits godets sur la couche d'isolation, l'intérieur desdits godets rempli de béton constituant lesdits supports.

L'invention concerne également un plancher d'habitation destiné à être équipé d'un élément de chauffage par le sol, tel qu'un câble ou film chauffant électrique, constitué d'une couche d'un matériau isolant thermique qui repose sur le sol et d'une dalle de béton qui repose sur ladite couche d'isolation par l'intermédiaire de supports de manière à former un ou plusieurs espaces de circulation d'air sous ladite dalle de béton, ledit élément de chauffage se trouvant noyé dans ladite dalle.

Selon l'invention, il comporte, noyé dans la dalle de béton, un élément qui est prévu pour former des moules pour des supports.

Ledit élément est avantageusement constitué d'une plaque dans laquelle sont formés une pluralité de godets.

Selon une autre caractéristique de l'invention, un plancher est pourvu de moyens mécaniques pour forcer la circulation de l'air contenu dans ledit ou lesdits espaces de circulation d'air. Lesdits moyens sont par exemple un évent et un ventilateur, ou encore un évent et un extracteur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est une vue de dessus d'un plancher réalisé selon le procédé de l'invention,
la Fig. 2 est une vue en coupe d'un plancher selon l'invention et réalisé selon le premier procédé de réalisation de l'invention,
la Fig. 3a montre une vue en coupe d'un plancher selon l'invention et réalisé selon le second procédé de l'invention, et
la Fig. 3b est une vue en perspective d'un élément utilisé dans le procédé illustré par la Fig. 3a.

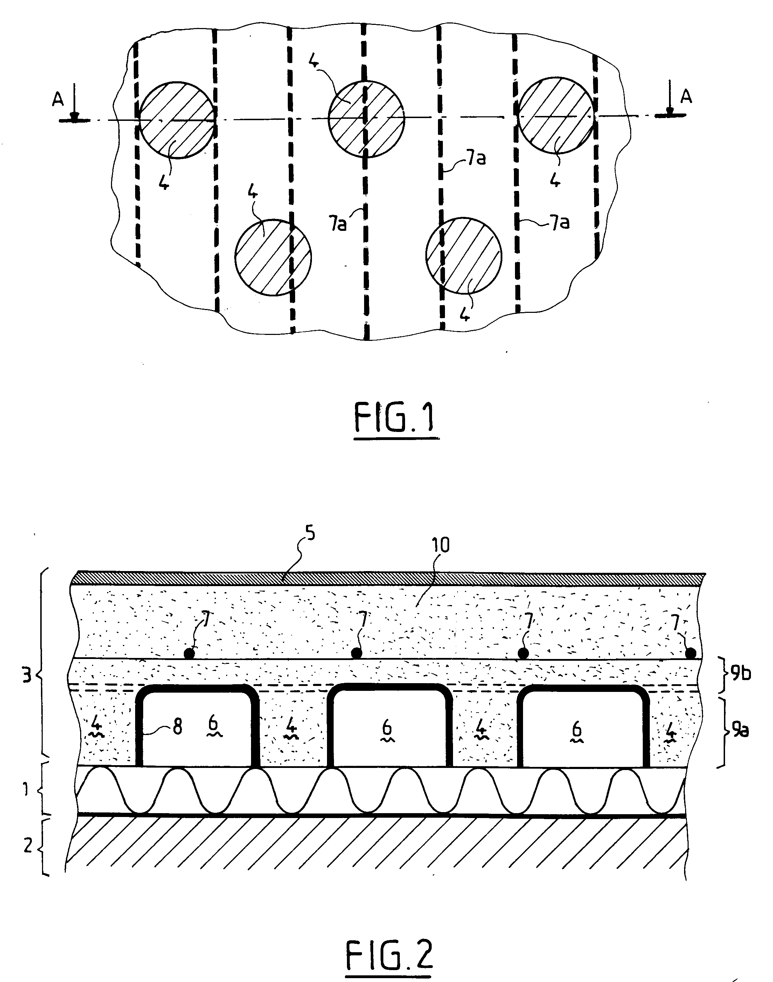

Le plancher représenté aux Figs. 1 et 2 est constitué d'une couche 1 dans un matériau isolant thermique qui repose sur le sol 2 et d'une dalle en béton 3 qui repose sur ladite couche d'isolation 2 par l'intermédiaire de supports 4.

La couche d'isolation 1 est dans un matériau du type polystyrène généralement utilisé dans la fabrication de planchers.

Sur la dalle 3, est représenté un revêtement 5 qui peut être une moquette.

Un élément chauffant 7 est noyé dans la dalle de béton 3. Cet élément 7 forme des boucles en serpentin dont on ne voit sur la Fig. 1a que les parties linéaires 7a. Cet élément chauffant 7 peut être constitué d'un câble électrique résistant, par exemple du type de celui qui est décrit dans le document de brevet EP-A-225 835.

Les supports 4 forment, sous la dalle de béton 3, un espace 6 à l'intérieur duquel l'air peut circuler librement.

Pour la réalisation de ce plancher, on procède de la manière suivante.

On pose une couche 1 d'un matériau isolant sur le sol 2 sur lequel on veut que repose le plancher. Puis, sur ladite couche 1, on pose un élément 8 qui forme des moules pour des supports 9a ainsi que pour un tablier 9b formant la partie inférieure de ladite dalle 3. On coule, ensuite, dans ledit élément 8, du béton de manière à former une chape 9 constituée desdits supports 9a et du tablier 9b. Lesdits supports 9a sont donc moulés par l'élément 8.

Sur le tablier 9b de la chape 9 ainsi formée, on pose l'élément chauffant 7. Cet élément chauffant 7 peut être du type de celui qui est décrit dans le document de brevet EP-A-225 835.

Pour finir, sur l'ensemble, on coule une nouvelle dalle de béton 10 qui pourra être par la suite recouverte d'un revêtement décoratif 5.

La chape 9 permet de pouvoir marcher sur le sol lors de la fabrication du plancher et notamment lors de la pose de l'élément chauffant 7.

On notera que dans ce procédé de réalisation, l'élément 8 formant moule est, après réalisation du plancher, noyé dans le plancher.

Dans un mode de réalisation préférentiel, les épaisseurs de la couche 1 et de la dalle 3 sont d'environ 5 cm.

Lorsqu'un objet présentant des propriétés thermiques d'isolant, tel qu'un fauteuil ou un matelas en mousse, est posé directement sur le plancher des Figs. 1 et 2, la chaleur qui est émise par l'élément chauffant 7 et qui ne peut s'évacuer par la surface supérieure de la dalle 3 réchauffe l'air présent dans l'espace 6 sous la dalle 3, créant un courant de convection dans cet espace 6. Ainsi, cette chaleur va diffuser dans cet espace 6 et s'évacuer sans qu'il y ait élévation excessive de température à l'endroit de l'élément chauffant 7 et de son environnement.

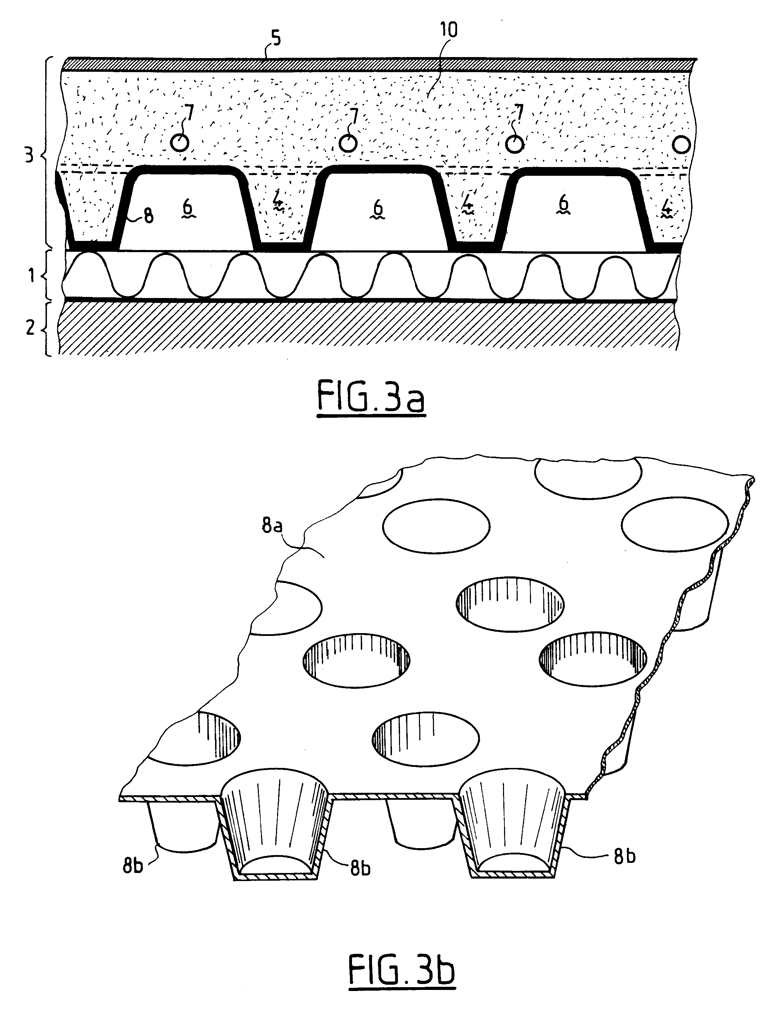

Il est également possible, dans le cadre de la présente invention, de réaliser un plancher de la manière suivante. Ce plancher est représenté à la Fig. 3a.

On pose une couche 1 d'un matériau isolant sur le sol 2 sur lequel on veut que repose le plancher. Puis, sur ladite couche 1, on pose un élément 8 constitué d'une plaque 8a dans laquelle sont formés des godets 8b (voir Fig. 3b). Lors de cette pose, on fait reposer le fond des godets 8b sur la couche d'isolation 1. L'élément 8 est par exemple constitué en polyéthylène; les godets 8b ont un diamètre moyen et une hauteur de l'ordre de 1 cm; ils sont tronconiques.

L'élément 8 se présente sous la forme d'une grande plaque qui est donc posée à même la couche 1. Deux plaques jointives sont assemblées par exemple au moyen d'un ruban adhésif.

Sur cet élément 8, est posé l'élément chauffant 7. L'élément chauffant est par exemple un câble chauffant électrique, tel que celui qui est décrit dans le document de brevet EP-A-225 835.

Puis est coulée une dalle de béton 10 qui est au départ relativement liquide. Ce béton liquide remplit donc les godets 8b de l'élément 8, jouant leur rôle de moules, et forme ainsi les supports 4.

On notera que l'élément chauffant 7 se trouve noyé à l'intérieur de la dalle de béton 10.

Le béton de la dalle 10 est par exemple autolissant. Ainsi, la dallé 10 peut directement être recouverte d'un revêtement décoratif 5.

On notera que dans ce procédé de réalisation, l'élément 8 formant moule est, après réalisation du plancher, noyé dans le plancher.

On notera qu'il est possible d'effectuer une aération mécanisée de l'espace d'air 6 qui se trouve sous la dalle de béton 3. Elle peut utiliser un ventilateur ou un extracteur à une extrémité de la pièce équipée du plancher de l'invention et un ou plusieurs évents à l'autre extrémité débouchant dans cette pièce ou une autre pièce.

On préférera l'utilisation d'un ventilateur. En effet, dans ce cas, en hiver, l'air ventilé, en se réchauffant au contact de la dalle de béton 3, contribuera au réchauffement de la pièce équipée du plancher. Il est possible de climatiser l'air ventilé de manière qu'en été, l'air insufflé dans la pièce, par le même circuit de circulation, puisse servir à refroidir la pièce.

## Revendications

**1)** Procédé de réalisation d'un plancher d'habitation constitué d'une couche (1) d'un matériau isolant thermique qui repose sur le sol (2) et d'une dalle de béton (3) reposant sur ladite couche (1) par l'intermédiaire de supports (4) de manière à former un ou plusieurs espaces de circulation d'air (6) sous ladite dalle de béton (3), caractérisé en ce qu'il consiste à poser une couche (1) d'un matériau isolant sur le sol (2), à poser sur ladite couche (1) un élément (8) prévu pour former des moules pour lesdits supports (4, 9a), à poser sur ledit élément (8) l'élément de chauffage (7), puis à couler sur ledit élément (8) du béton de manière à former lesdits supports (4, 9a) et à enrober l'élément de chauffage (7).

**2)** Procédé de réalisation d'un plancher d'habitation constitué d'une couche (1) d'un matériau isolant thermique qui repose sur le sol (2) et d'une dalle de béton (3) reposant sur ladite couche (1) par l'intermédiaire de supports (4) de manière à former un ou plusieurs espaces de circulation d'air (6) sous ladite dalle de béton (3), caractérisé en ce qu'il consiste à poser une couche (1) d'un matériau isolant sur le sol (2), à poser sur ladite couche (1) un élément (8) prévu pour former des moules pour lesdits supports (4, 9a) ainsi que pour un tablier (9b) formant la partie inférieure de la dalle (3), à couler, dans ledit élément (8), du béton de manière à former lesdits supports (9a) et ledit tablier (9b), à poser sur ledit tablier (9b) un élément chauffant et à couler une dalle de béton (10).

**3)** Procédé selon la revendication 1 ou 2, caractérisé en ce que l'élément (8) utilisé est constitué d'une plaque (8a) dans laquelle sont formés des godets (8b), et en ce que pour la pose dudit élément (8), on fait reposer le fond desdits godets (8b) sur la couche d'isolation (1), l'intérieur desdits godets (8b) rempli de béton constituant lesdits supports (4, 9a).

**4)** Plancher d'habitation destiné à être équipé d'un élément de chauffage (7) par le sol, tel qu'un câble ou film chauffant électrique, constitué d'une couche (1) d'un matériau isolant thermique qui repose sur le sol (2) et d'une dalle de béton (3) qui repose sur ladite couche d'isolation (1) par l'intermédiaire de supports (4) de manière à former un ou plusieurs espaces de circulation d'air (6) sous ladite dalle de béton (3), ledit élément de chauffage (7) se trouvant noyé dans ladite dalle (3), caractérisé en ce qu'il comporte, noyé dans la dalle de béton (3, 9), un élément (8) qui est prévu pour former des moules des supports (4).

**5)** Plancher selon la revendication 4, caractérisé en ce que ledit élément (8) est constitué d'une plaque (8a) dans laquelle est formée une pluralité de godets (8b).

**6)** Plancher selon la revendication 4 ou 5, caractérisé en ce qu'il est pourvu de moyens mécaniques pour forcer la circulation de l'air contenu dans ledit ou lesdits espaces de circulation d'air (6).

**7)** Plancher selon la revendication 6, caractérisé en ce que lesdits moyens sont un évent et un ventilateur.

**8)** Plancher selon la revendication 7, caractérisé en ce que lesdits moyens sont un évent et un extracteur.
